# EUROPÄISCHE PATENTSCHRIFT

(11) **EP 2 457 765 B1**
(45) Veröffentlichungstag und Bekanntmachung des Hinweises auf die Patenterteilung: **19.03.2014**
(21) Anmeldenummer: 11191176.4
(22) Anmeldetag: 29.11.2011
(51) Int. Cl.: B60N 2/50

(54) **Fahrzeugsitz mit geführten Scherenarmen**
Vehicle seat with controlled quadrant arms
Siège de véhicule doté de bras en ciseaux

(30) Priorität: 29.11.2010 DE 102010052619
(43) Veröffentlichungstag der Anmeldung: 30.05.2012
(73) Patentinhaber: GRAMMER AG, 92224 Amberg (DE)
(72) Erfinder: Himmelhuber, Frank, 92245 Kümmersbruck (DE)
(74) Vertreter: Hannke, Christian

(56) Entgegenhaltungen:
- DE-A1- 2 309 808
- DE-A1- 10 300 876
- DE-C2- 19 744 199

## Beschreibung

Die Erfindung betrifft einen Fahrzeugsitz mit einem ein Sitzteil und eine Rückenlehne umfassenden Sitzoberteil und einem Sitzunterteil, wobei zwischen dem Sitzoberteil und dem Sitzunterteil ein höhenverstellbares Sitzgestell mit mindestens zwei miteinander drehbar verbundenen Scherenarmen angeordnet ist, gemäß dem Oberbegriff des Patentanspruches 1.

Herkömmlicherweise weisen Fahrzeugsitze häufig höhenverstellbare Sitzgestelle auf, die sich aus zwei oder mehreren Scherenarmen zusammensetzen. Hierbei sind die Scherearme in ihrem mittleren Bereich gelenkig miteinander verbunden, so dass sie nach oben und nach unten ausgefahren werden können, welches gleichzeitig mit einer Verschiebung von zumindest einem Ende eines jedes Scherenarmes, vorzugsweise in horizontaler Richtung, einhergeht.

Eine derartige Verschiebung in eine vorzugsweise horizontal ausgerichtete Verschieberichtung erfolgt derart, dass die Scherenarme zumindest an einem ihrer Enden Rollen aufweisen, welche innerhalb einer Führungsschiene, die ebenso vorzugsweise horizontal verläuft und mit dem Sitzoberteil einerseits und dem Sitzunterteil andererseits verbunden sind, entlang rollen. Ein derartiges Anbringen von Rollen weist den Nachteil auf, dass diese kostenaufwendig hergestellt werden müssen, da sie häufig aus Metall oder aus Kunststoff mit Metalllager angefertigt werden müssen und mittels mehrerer Montageschritte mit den Enden der Scherenarme verbunden werden sollen. Zudem ist bei einer Abnutzung der Rollen und/oder der Führungsschienen, die häufig vorzugsweise U-förmig in ihrem Querschnitt ausgebildet sind und die Rollen umgeben, ein Auswechseln der Rollen in zeit- und kostenaufwändiger Weise notwenig.

Ein weiterer Nachteil ist darin zu sehen, dass die Rollen mit hoher Passgenauigkeit ebenso wie die Führungsschienen gefertigt werden müssen, um ein nahezu spielfreies Abrollen der Rollen innerhalb der Führungsschiene sicherzustellen und somit den Fahrzeugsitz bei Stattfinden eines Unfalls verkehrssicher auszugestalten.

Es ist auch bekannt, dass bei Abnutzung der Rollen oder anderen Elementen, die sich innerhalb der Führungsschiene bewegen, die zu Anfang vorliegenden Passgenauigkeiten nicht mehr vorhanden sind und somit das Zusammenspiel von Rollen und Führungsschienen mit höherem Spiel stattfindet. Dies führt dazu, dass Beifahrersitze, die bei fahrendem Fahrzeug unbesetzt sind, Klappergeräusche verursachen, da die Rollen oder sonstige zu führende Elemente innerhalb der Führungsschienen während des Überfahrens von Unebenheiten wackeln.

Ein gattungsgemäßer Fahrzeugsitz ist aus dem Dokument DE-A-2309808 bekannt.

Somit ist es Aufgabe der Erfindung, einem Fahrzeugsitz mit einem Sitzoberteil und einem Sitzunterteil sowie einem dazwischen angeordneten Sitzgestell zur Verfügung zu stellen, welcher eine kostengünstige und schnelle Herstellung eines zwischen dem Sitzoberteil und dem Sitzunterteil angebrachten Sitzgestelles und eine dauerhaft spielfreie Anordnung des Sitzgestelles in Führungsschienen des Fahrzeugsitzes ermöglicht.

Diese Aufgabe wird gemäß den Merkmalen des Patentanspruches 1 gelöst.

Ein wesentlicher Punkt der Erfindung liegt darin, dass bei einem Fahrzeugsitz mit einem ein Sitzteil und eine Rückenlehne umfassenden Sitzoberteil und einem Sitzunterteil, wobei zwischen dem Sitzoberteil und dem Sitzunterteil ein höhenverstellbares Sitzgestell mit mindestens zwei miteinander drehbar verbundenen Scherenarmen angeordnet ist, zumindest ein erstes Ende von mindestens einem der Scherenarme mit mindestens einem Gleitelement zum in mindestens eine Verschieberichtung gleitenden Verschieben des ersten Endes entlang von mindestens einer Führungsschiene verbunden ist, wobei das Gleitelement mindestens ein flexibel ausgebildetes Druckkraftelement zum Ausüben einer gegen die Führungsschiene gerichteten Druckkraft aufweist. Durch die Anordnung von Gleitelementen mit derartigen Druckkraftelementen, die vorzugsweise aus flexiblem Material hergestellt sind, ist eine kostengünstige und schnelle Herstellung des Sitzgestells, welches mit den Gleitelementen innerhalb von Führungsschienen anzuordnen ist, und im Zusammenhang mit dem Druckkraftelement ebenso eine spielfreie Anordnung des Sitzgestells mit den Gleitelementen innerhalb der Führungsschienen - auch nach einer langen Abnutzungszeit möglich. Dies ermöglicht auch das Vermeiden von Klappergeräuschen, die durch Gleitelemente verursacht würden, selbst wenn der Sitz unbelegt ist und sich das Fahrzeug zeitgleich auf unebener Fahrbahn bewegt. Diese Gleitelemente sind vorzugsweise aus Kunststoff.

Vorteilhaft ist ein derartiges Gleitelement aus mindestem einem im wesentlichen quaderförmigen Element bestehend, wobei dieses Element mit mindestens zwei sich gegenüberliegenden ersten Oberflächen an Gleitflächen der Führungsschiene, die vorzugsweise ein U-förmiges Querschnittsprofil aufweisen, entlanggleitet. Durch diese Anordnung eines derartigen quaderförmigen Gleitelementes innerhalb von U-förmigen Führungsschienen wird eine hohe Sicherheit gegen das Sich lösen der Enden der Scherenarme aus den Führungsschienen gewährleistet, selbst wenn beispielsweise ein starker Aufprallunfall geschieht. Denn die U-förmigen Querschnittsprofile umgreifen das Gleitelement, welches quaderförmig ausgebildet ist, an seiner Ober- und Unterseite, welche erste Oberflächen darstellen und können sogar seitlich heruntergezogene Profile aufweisen, sodass auch ein seitliches Herausgleiten der Gleitelemente, also quer zu der Verschieberichtung, nicht mehr möglich ist.

Erfindungsgemäß sind die ersten Oberflächen derart ausgestaltet, dass jede erste Oberfläche eine im mittleren Bereich der ersten Oberfläche angeordnete erste Fläche aufweist, und, in Verschieberichtung betrachtet, mindestens ein nach der ersten Oberfläche angeordnetes erstes flügelartiges Druckkraftelement sowie mindestens ein vor der ersten Oberfläche angeordnetes zweites flügelartiges Druckkraftelement angeordnet sind. Derartige Druckkraftelemente ermöglichen das Abdrücken des Gleitelementes von den Innenseiten der Führungsschiene, also von der obenliegenden Innenseite und von der untenliegenden Innenseite der Führungsschiene.

Zudem kann durch das Anordnen von einem ersten und einem zweiten Druckkraftelement vor und hinter der ersten Fläche erreicht werden, dass selbst während eines Verschieben des Gleitelementes oder nach dem Verschieben des Gleitelementes innerhalb der Führungsschiene zwar eine leicht angewinkelte Verdrehposition bzw. Verstellposition des Gleitelementes, die einer geneigten Stellung in Verschieberichtung oder entgegen der Verschieberichtung entspricht, vorliegen kann, jedoch trotzdem ein spielfreies Anliegen der Druckkraftelemente an den ober- und unterseitigen Innenflächen der Führungsschiene sichergestellt ist. Somit liegt ein spielfreies Positionieren des Gleitelementes innerhalb der Führungsschiene vor.

Das erste und das zweite flügelartige Druckkraftelement weisen in Längs- und Querrichtung der Führungsschiene leicht gebogene Plattenelemente auf, die ein freies erstes Ende, welches gegen die Führungsschiene drückt, und ein am Gleitelement befestigtes zweites Ende aufweisen. Derartige Plattenelemente sind also flügelartig ausgebildet, und zeigen aufgrund ihrer Materialeigenschaften, wobei es sich hierbei vorrangig um Kunststoff handelt, eine Vorspannung gegenüber der Innenseite der Führungsschiene auf. Die Vorspannung des flügelartigen Plattenelementes wird durch die leicht gebogene Form, welche eine Ausrichtung des freien Endes in Richtung der Innenseite der Führungsschiene zeigt, erreicht.

Die erste Oberflächen sind derart gestaltet, dass jede erste Oberfläche, in Verschieberichtung betrachtet, mindestens eine nach der ersten Fläche angeordnete ebene oder bogenförmige zweite Fläche sowie mindestens eine vor der ersten Fläche angeordnete ebene oder bogenförmige dritte Fläche aufweisen. Hierbei können die zwei zweiten Flächen und die zwei dritten Flächen jeweils eines der flexibel ausgebildeten Druckkraftelemente randseitig einfassen.

Alternativ kann jeweils eine zweite Fläche und eine dritte Fläche von jeweils zwei Druckkraftelementen eingefasst werden. Es ist auch denkbar, dass nur Druckkraftelemente, jedoch nicht zweite und dritte Flächen angeordnet sind. Hierfür könnte das Druckkraftelement auch quer zur Verschieberichtung des Gleitelementes derart ausgerichtet sein, dass das freie Ende des Druckkraftelementes in eine Querrichtung der Führungsschiene und nach oben geneigt ausgerichtet ist.

Die zweite Fläche oder Flächen, ist/sind - in Verschieberichtung betrachtet - von der ersten Fläche aus abfallend zu einem ersten Ende der ersten Oberfläche hin verlaufend ausgebildet. Die dritte Fläche/Flächen hingegen ist/sind - entgegen der Verschieberichtung betrachtet - von der ersten Fläche aus abfallend zu einem zweiten Ende der ersten Oberfläche hin verlaufend ausgebildet.

Durch die Ausbildung derartiger zweiter und dritter Flächen wird verhindert, dass bei einem Verschieben des Gleitelementes in Vorwärts- und Rückwärtsrichtung, also in und entgegen zu der Verschieberichtung, ein Verkanten des quaderförmig ausgebildeten Gleitelementes stattfindend.

Vielmehr kann aufgrund dieser abgeschrägten zweiten und dritten Flächen eine Blockierung des Gleitelementes, selbst bei einer schnellen Verschiebung in Verschieberichtung, innerhalb der Führungsschiene vermieden werden, da das Gleitelement bei einem Nachvorneverschieben auf der oberen zweiten Fläche und der unteren dritten Fläche durch leichtes verdrehen des gelenkig aufgehängten Gleitelementes und bei einem Nachhintenverschieben auf der oberen dritten Fläche und der zweiten unteren Fläche gleitet. Dies führt dazu, dass das Gleitelement nicht hängen bleibt und kein Ruckeln stattfindet, wie es bei einem Verkanten eines exakt quaderförmigen Elementes stattfinden könnte, sofern wenig Spiel zwischen den Gleitflächen der Führungsschiene und dem Gleitelement vorliegt. Es wird somit durch ein leichtes Verdrehen des Gleitelementes, das mittels einer senkrecht zur Führungsschiene verlaufenden Achse drehbar an dem ersten Ende eines Scherenarmes angeordnet ist, ein Verkanten und Ruckeln während der Verschiebebewegung vermieden.

Gemäß einer Weiterbildung der Erfindung weisen die erste und/oder zweite und/oder dritte Fläche, senkrecht zu der Verschieberichtung betrachtet, ausgehend vom mittleren Bereich der Fläche abfallende Flächen zu Randbereichen des Elementes hin auf. Hierdurch kann auch ein ungewolltes seitliches Verkanten des Gleitelementes vermieden werden. Ein derartiges Abfallen der Flächen wird vorrangig bei der ersten Fläche angewendet.

Die zweite und dritte Fläche können als ebene Flächen mit einem Winkel aus einem Bereich von 0,05°-5,0° gegenüber einer Ebene der Gleitfläche der Führungsschiene angeordnet sein. Derartige Winkel, wovon bevorzugt 0,2° als Winkelmaß verwendet wird, haben sich in ihrer Größenordung deshalb bewährt, da zum Einen das blockierungsfreie Gleiten der Gleitelemente innerhalb der Führungsschiene, die das Gleitelement zumindest ober- und unterseitig umgreifen, möglich ist und zum Anderen ein möglichst geringes Spiel zwischen den Gleitflächen der Führungsschiene und den Oberflächen des Gleitelementes selbst bei einem gleitendem Zustand sichergestellt wird.

Die ersten Oberflächen können gemäß einer Ausführungsform auch derart gestaltet sein, dass jede erste Oberfläche zwei ebene Flächen, die, in Verschieberichtung betrachtet, von einem mittleren Bereich der erste Oberfläche aus abfallend zu einem ersten und zweiten Ende der ersten Oberfläche hin verlaufen, aufweisen. Hierbei stehen gegenüber der zuvor genannten Ausführungsformen mit einer ersten, einer zweiten und einer dritten Fläche vergrößerter Gleitteilflächen bei einer Gleitbewegung zur Verfügung und insofern besteht eine geringere Abnutzung gegenüber der zuvor genannten Ausführungsform. Allerdings ist hierbei nachteilhaft, dass ein größeres Spiel zwischen den Gleitflächen der Führungsschienen und der Oberfläche des Gleitelementes vorhanden sein muss, da der Winkel zwischen den Flächen und einer Ebene der Gleitfläche der Führungsschiene aus einem Bereich von 0,1 °-15,0° zur Gewährleistung einer guten Funktion der Gleitbewegung ausgewählt werden muss.

Gemäß einer weiteren Ausführungsform kann das Druckkraftelement im ungespannten Zustand zumindest teilweise gegenüber einer Ebene, die durch die erste Fläche aufgespannt ist, mit einem Abstand von 0,3 - 3 mm, vorzugsweise von 0,6 mm, von dem Gleitelement wegweisend angeordnet sein. Dieser Abstand stellt sicher, dass immer ausreichend Spielraum zwischen dem Gleitelement und der Führungsschiene - selbst bei der Gefahr einer Verkantung - besteht und zugleich trotzdem durch die Druckkraftelemente ein spielraumfreies Gleiten des Gleitelementes entlang der Führungsschiene sichergestellt ist. Dies kann auch dann zutreffen, wenn das Gleitelement dazu neigt, sich über ein Nachvorne- oder Nachhintenverschieben oder bei einem links- oder rechts gerichteten Schieben durch neigen zu verkanten.

Das Gleitelement kann auch über seine gesamte Breite hinweg ein flügelartiges Druckkraftelement vor der Gleitfläche und ein flügelartiges Druckkraftelement hinter der Gleitfläche aufweisen, ohne dass weitere Gleitflächen vor und hinter der ersten Gleitfläche vorliegen.

Ebenso ist denkbar, dass vor und hinter der ersten Gleitfläche zwar eine zweite und eine dritte Gleitfläche vorhanden sind, diese jedoch nur - in Breitenrichtung des Gleitelementes betrachtet - mittig angeordnet sind und links und rechts davon jeweils ein flügelartiges Druckkraftelement vorliegt. Somit sind insgesamt vier flügelartige Druckkraftelemente auf einer Oberseite des Gleitelementes und vier auf einer Unterseite des Gleitelementes angeordnet.

Ebenso ist denkbar, dass die flügelartigen Druckkraftelemente sich in Querrichtung des Gleitelementes und der Führungsschiene und nicht in Längsrichtung des Gleitelementes und der Führungsschiene erstrecken. Hierfür kann jeweils eines oder mehrere der flügelartigen Druckkraftelemente - in Verschieberichtung betrachtet - hinter der ersten Gleitfläche angeordnet sein. Die freien Enden der flügelartigen Druckkraftelemente können zur Innenseite des Fahrzeugsitzes hin oder zur Außenseite hin gewandt sein. Ebenso ist denkbar, dass die freien Enden sowohl zur Innenseite als auch zur Außenseite hin auf der Oberseite und der Unterseite des Gleitelementes ausgerichtet sind.

Die Gleitelemente sind jeweils mit mindestens einer senkrecht zur Führungsschiene verlaufenden Achse, die ebenso vorzugsweise horizontal ausgebildet ist, an dem ersten Ende des drehbaren Scherenarmes angelagert und greifen in eine hierfür vorzugsweise zentral in dem Gleitelement vorgesehene Ausnehmung ein, die nicht zwingend durch das gesamte Gleitelement hindurchgehen muss, sondern sich beispielsweise bis zur halben Breite des Gleitelementes erstreckt.

Weitere vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:
- Fig. 1: in einer schematischen Darstellung ein Fahrzeugsitz mit einem Gleitelement gemäß der vorliegenden Erfindung sowie wie ein Ausschnitt aus diesem Fahrzeugsitz;
- Fig. 2: in einer perspektivischen Darstellung das Gleitelement für einen Fahrzeugsitz gemäß einer ersten Ausführungsform der Erfindung;
- Fig. 3: in einer perspektivischen Darstellung das Gleitelement für einen Fahrzeugsitz gemäß der zweiten Ausführungsform der Erfindung;
- Fig. 4: in einer perspektivischen Darstellung das Gleitelement für einen Fahrzeugsitz gemäß einer dritten Ausführungsform der Erfindung;
- Fig. 5: in einer perspektivischen Darstellung das Gleitelement für einen Fahrzeugsitz gemäß einer vierten Ausführungsform der Erfindung;
- Fig.6: in verschiedenen Darstellungen das Gleitelement gemäß der ersten Ausführungsform der Erfindung;
- Fig. 7a, 7b: in einer Seitendarstellung das Gleitelement für den Fahrzeugsitz gemäß der ersten Ausführungsform der Erfindung mit zwei verschiedenen Winkelstellungen des Gleitelementes;
- Fig. 8a, 8b: in einer Querschnittsdarstellung das Gleitelement, wie in Fig. 7a, 7b gezeigt, für den Fahrzeugsitz gemäß der ersten Ausführungsform der Erfindung mit zwei verschiedenen Winkelstellungen des Gleitelementes;

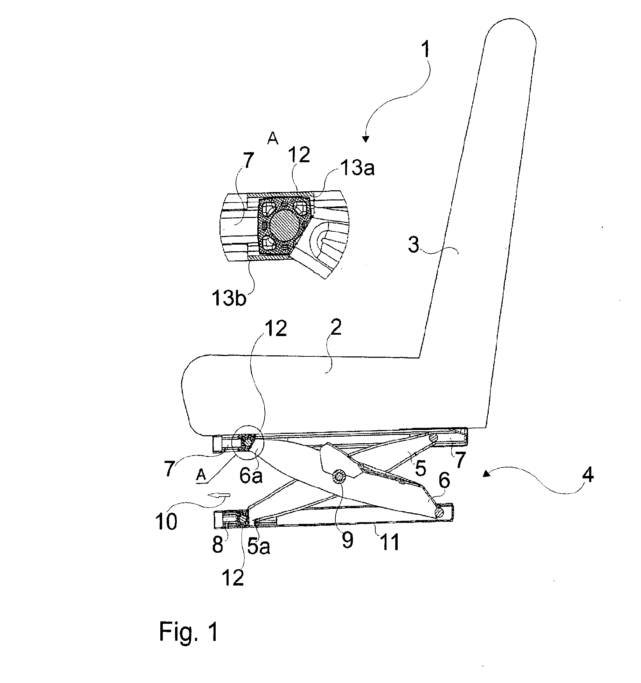

In Fig. 1 ist in einer schematischen Seitendarstellung ein Fahrzeugsitz 1 zusammen mit dem Gleitelement gemäß einer ersten Ausführungsform der Erfindung auch in einer Ausschnittsdarstellung dargestellt.

Der Fahrzeugsitz 1 setzt sich aus dem Sitzteil 2 und der Rückenlehne 3 zusammen und weist das Sitzgestell 4 auf, welches zwischen einem Sitzoberteil, das sich aus dem Sitzteil 2 und der Rückenlehne 3 sowie einem oberen rahmenähnlichen Gestell, welches unter anderem eine Führungsschiene 7 aufweist, zusammensetzt, und einem Sitzunterteil, welches ebenso rahmenartig oder aus zwei getrennten Schienen 11 aufgebaut werden kann und unter anderem eine Führungsschiene 8 enthält, angeordnet ist.

Zudem beinhaltet das Sitzgestell 4 zwei Scherenarme 5, 6, die mittels einer Achse 9 vorzugsweise quer zu der Fahrzeugsitzrichtung bzw. der Sitzrichtung der Person, die den Fahrzeugsitz benutzt, verläuft, drehbar miteinander verbunden sind.

Die Scherenarme 5, 6 können an ihren hinteren Enden bzw. - in Bildebene betrachtet - an ihrem rechten Ende fest mit der Sitzunterteilschiene 11 und einem Anteil des Sitzoberteils, zu der die Führungsschiene 7 gehört, verbunden sein. Alternativ können sie in Verschieberichtung 10 und entgegen der Verschieberichtung 10 verschiebbar sein. Es wird eine feste Arretierung zumindest des rechten bzw. hinteren Endes der Scherenarme 6 bevorzugt. Ein vorderes Ende 5a und 6a der Scherenarme 5, 6 ist erfindungsgemäß mit Gleitelementen 12 verbunden und kann mittels dieser vorzugsweise aus Kunststoff hergestellten Gleitelemente, die eine hohe Härte aufweisen, in Verschieberichtung 10 oder entgegen der Verschieberichtung 10 verschoben werden. Dies ist notwendig, wenn der Sitz eine Höhenverstellung erfahren soll, sich also die beiden Scherenarme nach oben oder nach unten auslenken und somit auch in Richtung der Verschieberichtung oder entgegen dieser Verschieberichtung mittels der Gleitelemente verschoben werden sollen.

In Fig. 1 ist gemäß einer Ausschnittsdarstellung A das Gleitelement innerhalb der Führungsschiene 7 in vergrößerter Darstellung wiedergegeben. Dieser Darstellung ist zu entnehmen, dass das Gleitelement mit seiner oberen Oberfläche und seiner unteren Oberfläche entlang von Gleitflächen 13a, 13b der Führungsschiene gleitet, sofern es nach vorne und hinten bzw. - in Bildebene betrachtet - nach links und rechts verschoben wird.

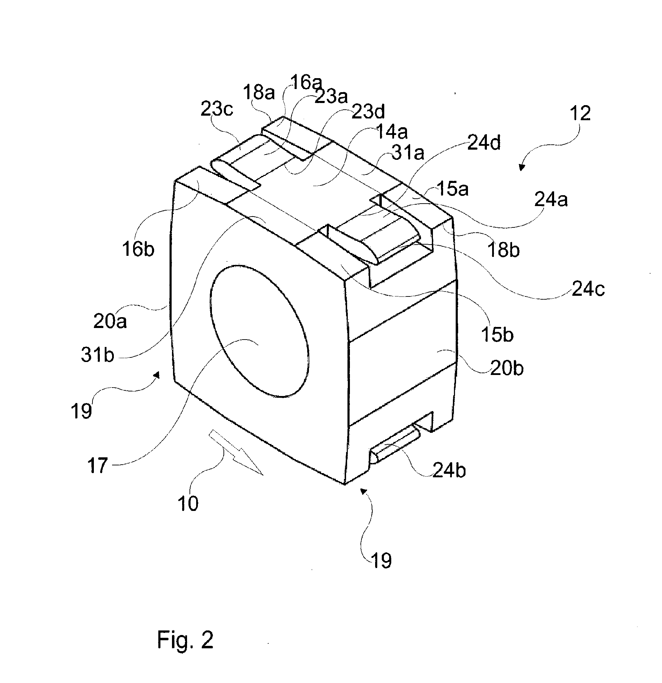

In Fig. 2 ist in einer perspektivischen Darstellung das Gleitelement, welches vorzugsweise aus Hartkunststoff hergestellt wird, um gute gleitende Eigenschaften gegenüber der Führungsschiene 7, 8, die vorzugsweise aus Metall gefertigt ist, aufzuweisen, dargestellt. Das Gleitelement 12, welches ein im wesentlichen quaderförmige Form hat, weist die ersten Oberflächen 18, die oben und unten entlang von Gleitflächen der Führungsschienen gleitend angeordnet sind, sowie Oberflächen 19, die vorne und hinten in Fahrzeugsitzrichtung betrachtet, angeordnet sind, auf.

Der in Fig. 2 wiedergegebenen perspektivischen Darstellung des Gleitelementes für einen Fahrzeugsitz gemäß der ersten Ausführungsform der Erfindung ist zu entnehmen, dass die ersten Oberflächen 18 mit einem ersten Ende 18a und einem zweiten Ende 18b eine zentrale erste Fläche 14a, 14b aufweisen, die - sofern der Fahrzeugsitz momentan eine horizontale Ausrichtung aufweist - ebenso horizontal ausgerichtet sind. Ausgehend von diesen zentralen ersten Flächen 14a, 14b ist, in Verschieberichtung 10 betrachtet, eine zweite Fläche 16a und 16b nach der ersten ebenen Fläche 14a angeordnet, die eine Abschrägung des quaderförmigen Elementes darstellt und somit ausgehend von der ersten Fläche 14a in Richtung des ersten Endes 18a der ersten Oberfläche 18 abfällt.

Ebenso ist eine dritte Fläche 15a, 15b angeordnet, die - in Verschieberichtung betrachtet - vor der ersten Fläche 14a angeordnet ist und ausgehend von der ersten Fläche 14a in Richtung des zweiten Endes 18b der ersten Oberfläche 18 abfallend verläuft.

Durch die Ausbildung dieser drei Flächen 14a, 15a und 16a sowie 15b und 16b wird vorteilhaft erreicht, dass das Gleitelement sich geringfügig um eine Achse, die in einer Ausnehmung 17 des Gleitelementes gelagert ist, während der Verschiebebewegung drehen kann, ohne sich hierbei innerhalb der vorzugsweise in Querrichtung U-förmig ausgebildeten Führungsschienen zu verhaken bzw. innerhalb dieser Führungsschiene blockiert zu werden. Denn durch ein Verdrehen, welches bedingt durch die Verschiebekraft in horizontaler Richtung erfolgt, wird ein Gleiten des Gleitelementes auf den Flächen 16a und 16b sowie den diagonal gegenüberliegenden Flächen auf der Unterseite während einer in Verschieberichtung 10 vorwärts gerichteten Verschiebebewegung und ein Gleiten auf den Flächen 15a und 15b sowie den diagonal gegenüberliegenden untenliegenden Flächen während einer entgegen der Verschieberichtung 10 gerichteten Verschiebebewegung bewirkt. Somit ist immer zuverlässig ein Gleiten zwischen Gleitflächen 13a und 13b der Führungsschiene und dem Gleitelement 12 unter Beibehaltung eines geringen Spiels bzw. Zwischenraumes bzw. Spielraumes zwischen den Gleitflächen der Führungsschiene und den Oberflächen 18 des Gleitelementes sichergestellt.

Zusätzlich weist das Gleitelement flügelartige Druckkraftelemente bzw. Vorspannelemente 23a und 24a, die oberseitig und ebenso auf der unteren Seite des Gleitelementes - natürlich dann in diesem Fall nach unten drückend - angeordnet sein können, auf. Diese flügelartigen Druckkraftelemente 23a, 24a, 24b sind derart gestaltet, dass sie mittig zwischen den zweiten Flächen 16a, 16b und 15a, 15b angeordnet sind. Die Druckkraftelemente 23a, 24a, 24b weisen freie Enden 23c, 24c auf, die sich vorzugsweise bogenförmig im Falle der Druckkraftelemente 23a, 24a nach oben neigen, um gegen eine hier nicht näher dargestellte Innenseite der Führungsschiene zu drücken. Demgegenüber neigt sich das freie Ende des Druckkraftelementes 24b und eines zweiten hier nicht dargestellten Druckkraftelementes nach unten, um gegen eine untenliegende Innenseite der Führungsschiene zu drücken. Auf diese Weise wird sichergestellt, dass das Gleitelement unter ständiger Berührung mit den innenliegenden Ober- und Unterseiten der Führungsschiene steht, egal in welche Richtung das Gleitelement - in Längsrichtung der Führungsschiene betrachtet - momentan geneigt ist. Ebenso wird insbesondere sichergestellt, dass durch den ständigen Kontakt der flügelartigen Druckkraftelemente mit der Führungsschiene kein Klappern der Gleitelemente innerhalb der Führungsschiene, die U-förmig ausgebildet ist, entstehen kann, selbst wenn die Gleitelemente zu einem Beifahrersitz, der momentan nicht belegt ist, gehören und das Fahrzeug sich momentan auf unebener Fahrbahn befindet.

Die flügelartigen Druckkraftelemente sind ihren anderen Enden 23d, 24d, die den freien Enden 23c, 24c gegenüber liegen, fest am Hauptkörper des Gleitelementes befestigt.

Das Gleitelement weist ebenso vorne und hinten, also an den Oberflächen 19 zentral gelegene erste Gleitflächen 20a und 20b auf, die - wenn das Gleitelement um 90° verdreht in die Führungsschiene eingebaut wird - ermöglichen, dass das Gleitelement ohne vorspannende flügelartige Druckkraftelemente verwendet wird. Dies kann beispielsweise dann gewünscht sein, wenn der Widerstand zwischen dem Gleitelement und der Führungsschiene während der Gleitbewegung verringert werden soll.

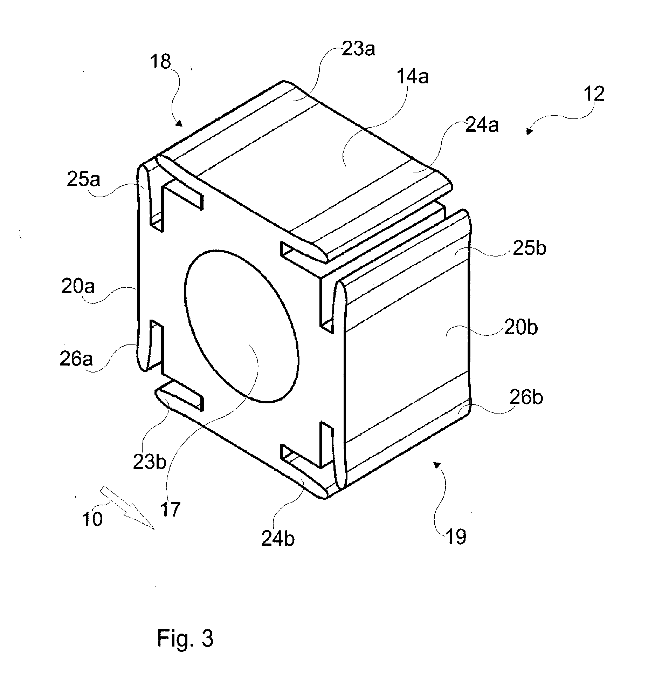

In Fig. 3 ist eine zweite Ausführungsform der Erfindung dargestellt. Gleiche und gleichbedeutende Teile werden mit gleichen Bezugszeichen versehen.

Wiederum sind eine zentrale erste Gleitfläche 14a sowie vorder- und rückseitige Gleitflächen 20a und 20b vorhanden. Gegenüber der in Fig. 2 dargestellten ersten Ausführungsform der Erfindung erstrecken sich flügelartige Druckkraftelemente 23a und 24a über die gesamte Breite des Gleitelementes, so dass keine zweiten und dritten Flächen 16a, 16b und 15a, 15b vorhanden sind.

Vorteilhaft sind ebenso an der Vorder- und an der Rückseite flügelartige Druckkraftelemente, die sich über die gesamte Breite des Gleitelementes erstrecken, mit dem Bezugszeichen 25a, 25b, 26a und 26b dargestellt. Auf diese Weise kann das Gleitelement 12 auch um 90 ° gedreht in die Führungsschiene eingebaut werden, da die Flächen 18 und 19 identisch aufgebaut sind. Dies erleichtert das Vermeiden von Montagefehlern, die vorliegen könnten, wenn das Gleitelement aus Versehen nicht im richtigen 90°-Winkel in die Führungsschiene eingebaut werden würde.

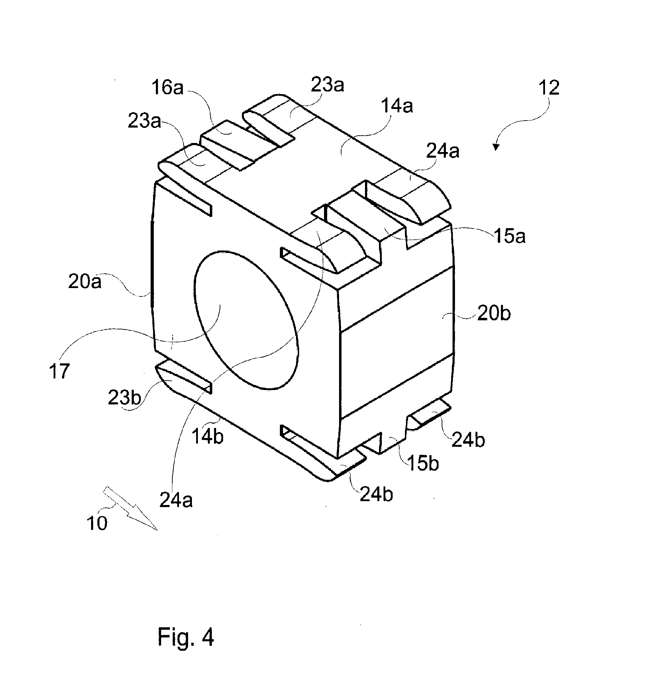

In Fig. 4 ist in einer perspektivischen Darstellung das Gleitelement für einen Fahrzeugsitz gemäß einer weiteren dritten Ausführungsform der Erfindung dargestellt.

Gleiche und gleichbedeutende Bauteile sind mit gleichen Bezugszeichen versehen.

Dieser Darstellung des Gleitelementes gemäß der dritten Ausführungsform der Erfindung ist zu entnehmen, dass in diesem Fall flügelartige Druckkraftelemente 23a, 24a, 23b und 24b jeweils zweifach vor und hinter der zentralen Gleitfläche 14a, 14b angeordnet sind. Dies bezieht sich auf die Verschieberichtung 10 innerhalb der Führungsschiene. Durch eine derartige zweifache Ausbildung der Druckkraftelemente 23a, 24a, 23b, 24b kann erreicht werden, dass das Gleitelement unanfälliger gegen eine seitliche Verkippung, also gegen eine Verkippung in eine Querrichtung, die senkrecht zu der Verschieberichtung 10 ausgerichtet ist, ist. Zugleich ist zwischen den jeweils zweifach angeordneten Druckkraftelementen 23a, 23b, 24a, 24b eine zweite Fläche 16a und eine dritte Fläche 15a, 15b angeordnet.

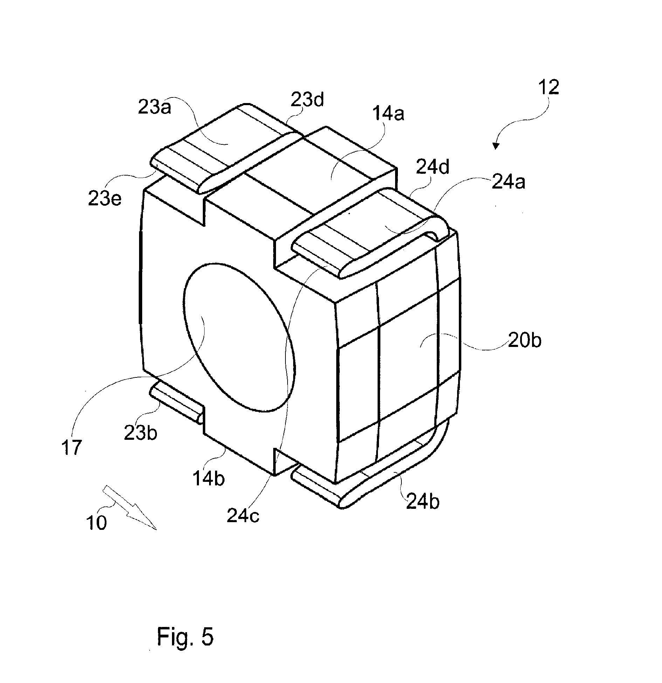

In Fig. 5 ist in einer perspektivischen Darstellung das Gleitelement für einen Fahrzeugsitz gemäß einer vierten Ausführungsform der Erfindung gezeigt,

Gleich und gleichbedeutende Bauteile sind mit den gleichen Bezugszeichen versehen.

Vor und hinter der zentralen ersten Fläche 14a und 14b ist jeweils ein flügelartiges Druckkraftelement als Vorspannelement 23a, 24a, 23b und 24b angeordnet. Diese Druckkraftelemente sind derart ausgerichtet, dass deren festes Ende 23d, 24d - in Verschieberichtung 10 betrachtet - im Bereich der linken Seite des Gleitelementes gebogen angeordnet sind.

Das freie Ende 23c, 24c dieser Druckkraftelemente 23a, 24a ist hingegen in Richtung der rechten Seite des Gleitelementes 12 und leicht nach oben gerichtet verlaufend.

Selbstverständlich ist zwischen diesem flügelartigen Druckkraftelement 23a, 24a und 24b sowie 23b und dem darunter oder darüber liegenden festen Anteil des Gleitelementes 12 ein schlitzartiger durchgehender Spalt, um die Federwirkung des zungenartigen Druckkraftelementes durch Sicherstellung eines entsprechenden Freiraumes dahinter zu gewährleisten.

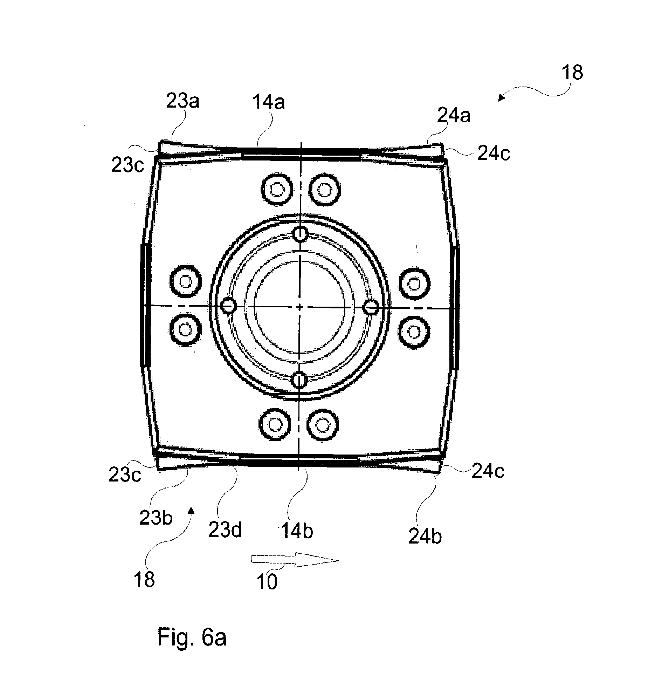

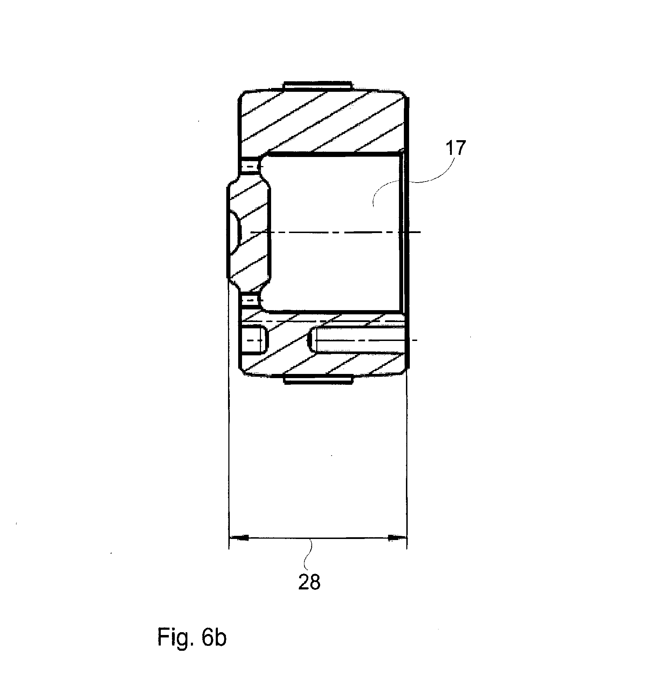

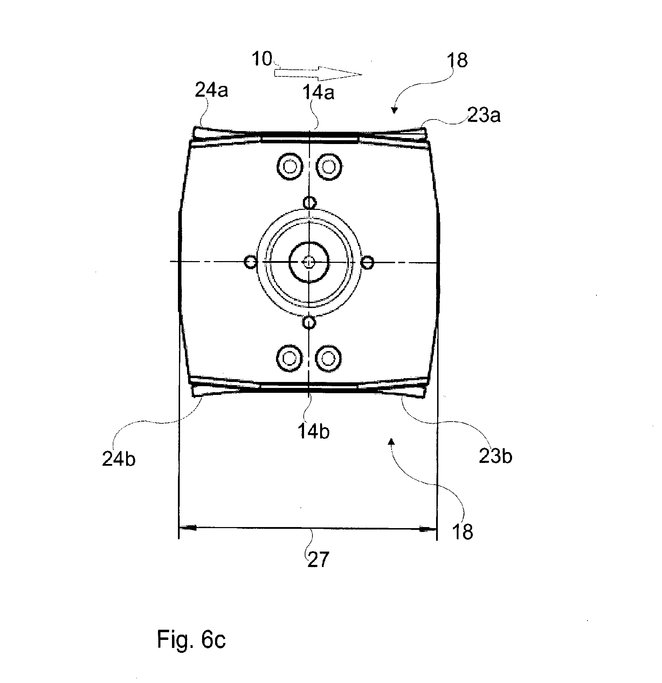

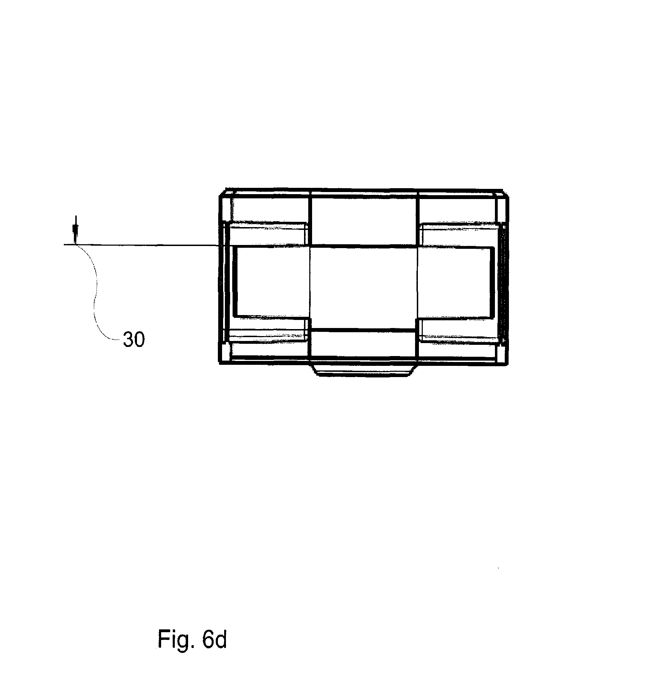

In Fig. 6 ist in mehreren Darstellungen das Gleitelement für den Fahrzeugsitz gemäß der ersten Ausführungsform der Erfindung gezeigt. Zum einem wird in Fig. 6a in einer Seitendarstellung das Gleitelement mit den zentralen Gleitflächen 14a, 14b sowie den zungenartigen Druckkraftelementen 23a, 24a, 23b und 24b dargestellt. Demgegenüber ist die andere Seitendarstellung in Fig. 6c wiedergegeben.

In Fig. 6b hingegen ein Querschnitt durch das Gleitelement dargestellt. Dieser Darstellung ist deutlich zu entnehmen, dass in der Ausnehmung 17 eine Achse, um die dieses Gleitelement gedreht werden kann, angeordnet werden kann.

In Fig. 6d ist eine Draufsicht des in den Fig. 6a - 6c wiedergegebenen Gleitelementes dargestellt.

Ein derartiges Gleitelement weist in seiner Kantenlänge 27 beispielsweise ein Abmaß von 15 - 45 mm vorzugsweise von 20 - 30 mm auf. Das Gleitelement kann eine Breite 28 von beispielsweise 10 - 20 mm, vorzugsweise von 14 - 17 mm, aufweisen.

Die Breite 30 des Druckkraftelementes ist beispielsweise aus einem Bereich von 2 - 10 mm, vorzugsweise aus einem Bereich von 5 - 8 mm.

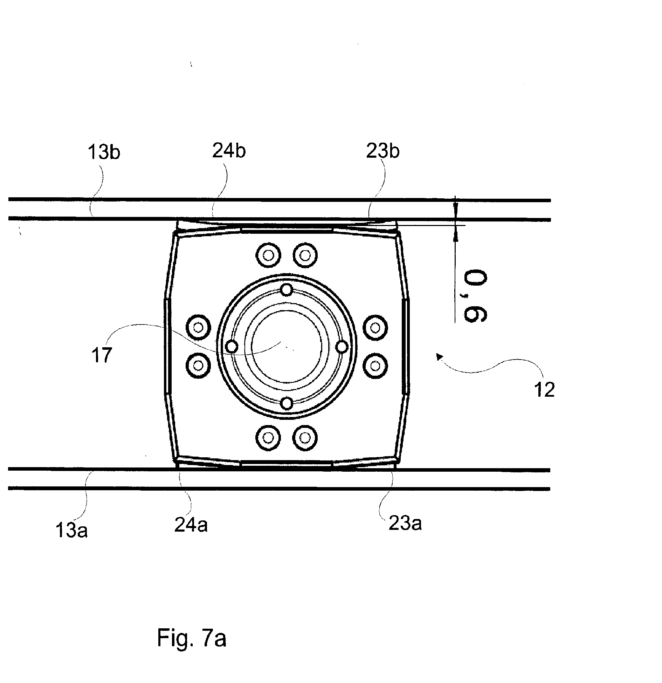

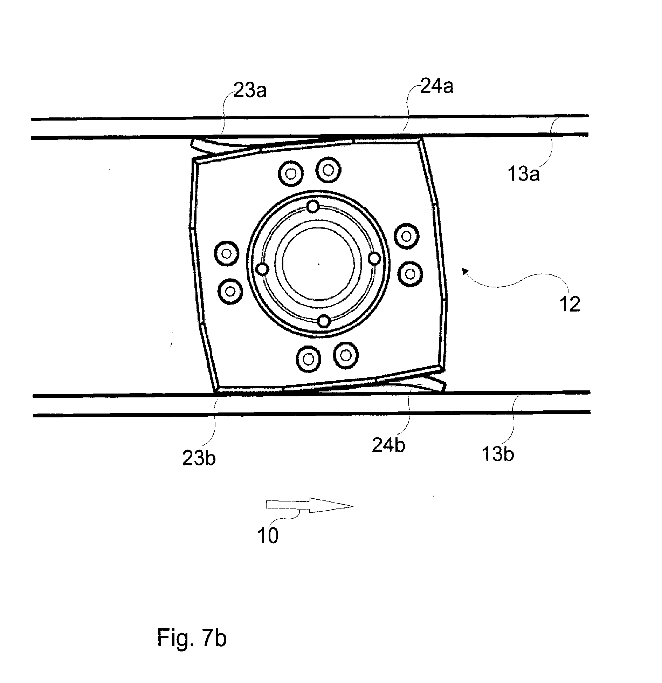

In Fig. 7a und 7b sind in zwei Seitendarstellungen das Gleitelement gemäß der ersten Ausführungsform der Erfindung mit zwei verschiedenen Winkeldarstellungen des Gleitelementes wiedergegeben.

Das Gleitelement ist innerhalb der Führungsschiene mit einer inneren oberen Seite 13a und einer inneren unteren Seite 13b angeordnet.

Die Druckkraftelemente 24a, 24b, 23a und 23b sind unter Vorspannung gegen die inneren Oberflächen 13a und 13b der Führungsschiene gedrückt und halten das Gleitelement - auch bei unbesetzten Fahrzeugsitz - klapperfrei innerhalb der Führungsschiene.

In Fig. 7b ist eine Winkeldarstellung des Gleitelementes 12 bei einem Verschieben des Gleitelementes entgegen der Verschieberichtung 10 wiedergegeben. Dieser Darstellung ist zu entnehmen, dass bei einer derartigen Verschiebebewegung des Gleitelementes die Druckkraftelemente 23b und 24a vollständig eingedrückt, also gegen den Gleitelementkörper gedrückt sind. Die Druckkraftelemente 23a und 24b sind jedoch umso mehr ausgefahren und drücken auch weiterhin trotz dieser Kippverstellung des Gleitelementes gegen die Innenseiten 13a und 13b der Führungsschiene. Dies stellt wiederum ein stetigen Kontakt des Gleitelementes mit der Führungsschiene und ein geräuscharmes Gleiten und Anordnen des Gleitelementes innerhalb der Führungsschiene sicher.

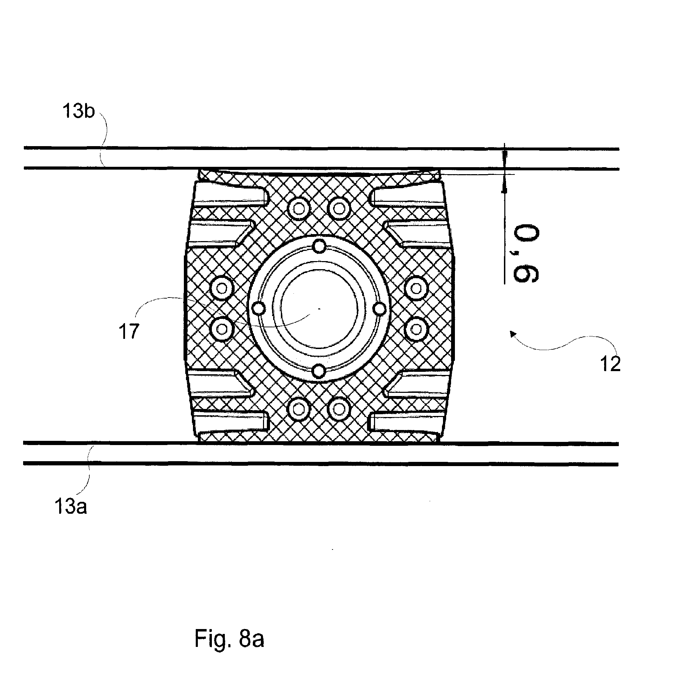

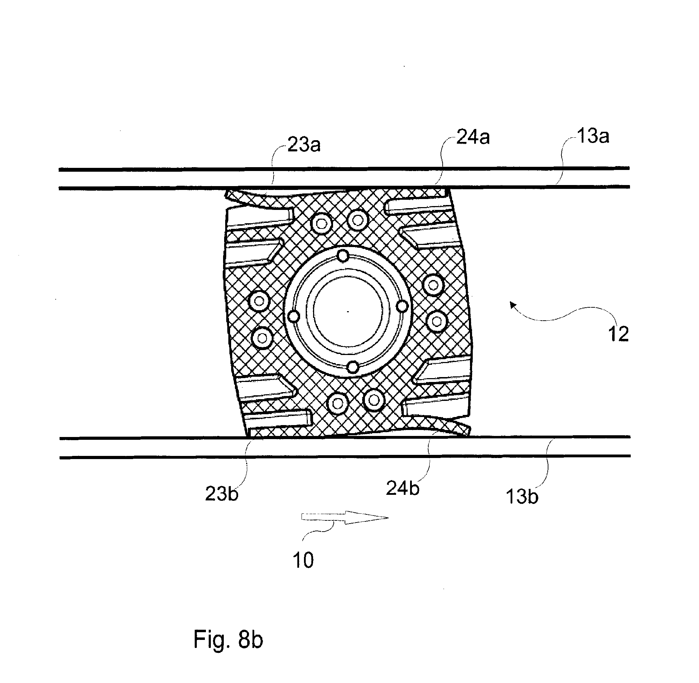

In Fig. 8a und 8b ist in einer Querschnittsdarstellung das Gleitelement für den Fahrzeugsitz gemäß der ersten Ausführungsform der Erfindung wiederum in zwei verschiedenen Winkeldarstellungen wiedergegeben.

In Fig. 8a befindet sich das Gleitelement in einer Ruheposition, wird also nicht verschoben. In dieser Darstellung ist ein druckkraftbeaufschlagter Kontakt des Gleitelementes mit den Innenseiten 13a und 13b der Führungsschiene sichergestellt und ein Klappern des Gleitelementes wird hierdurch verhindert.

In Fig. 8b wird eine Gleitbewegung des Gleitelementes 12 innerhalb der Führungsschiene durchgeführt. Diese findet entgegen der Verschieberichtung 10 statt.

In Fig. 8b ist wiedergegeben, dass die unter Vorspannung stehenden Druckkraftelemente 23a und 24b weiter ausgefahren sind als in einer Ruhestellung des Gleitelementes, um die durch die Neigung des Winkelelementes und dessen Winkelstellung gegenüber der Führungsschiene erzeugten größeren Freiräume in diesen Bereich auszugleichen. Und zugleich sind die Druckkraftelemente 24a und 23b wesentlich stärker gegen den Hauptkörper des Gleitelementes 12 gerückt und stellen ein mögliches Gleiten entlang der Innenseiten 13a und 13b der Führungsschiene sicher.

### Bezugszeichenliste

- 1: Fahrzeugsitz
- 2: Sitzteil
- 3: Rückenlehne
- 4: Sitzgestell
- 5: Scherenarme
- 5a: vorderes Ende
- 6: Scherenarme
- 6a: vorderes Ende
- 7: Führungsschiene
- 8: Führungsschiene
- 9: Achse
- 10: Verschieberichtung
- 11: Schienen
- 12: Gleitelement
- 13a, 13b: Gleitflächen
- 14a, 14b: erste Flächen
- 15a, 15b: dritte Flächen
- 16a, 16b: zweite Flächen
- 17: Ausnehmung
- 18: Oberfläche
- 18a, 18b: erstes Ende, zweites Ende
- 19: Oberfläche
- 20a, 20b: erste Gleitflächen
- 23a, 23b: Druckkraftelemente
- 23c: freies Ende
- 23d: Ende
- 24a, 24b: Druckkraftelemente
- 24c: freies Ende
- 24d: Ende
- 27: Kantenlänge
- 28: Breite
- 30: Breite
- 31 a, 31 b: abfallende Flächen

## Patentansprüche

1. Fahrzeugsitz mit einem ein Sitzteil (2) und eine Rückenlehne (3) umfassenden Sitzoberteil (2 ,3 ,7) und einem Sitzunterteil (11), wobei zwischen dem Sitzoberteil (2, 3, 7) und dem Sitzunterteil (11) ein höhenverstellbares Sitzgestell (4) mit mindestens zwei miteinander drehbar verbundenen Scherenarmen (5, 6) angeordnet ist, wobei zumindest ein erstes Ende (5a, 6a) von mindestens einem der Scherenarme (5, 6) mit mindestens einem Gleitelement (12) zum in mindestens eine Verschieberichtung (10) gleitenden Verschieben des ersten Endes (5a, 6a) entlang von mindestens einer Führungsschiene (7, 11) verbunden ist, und das Gleitelement (12) mit mindestens zwei sich gegenüberliegenden ersten Oberflächen (18) an Gleitflächen (13a, 13b) der Führungsschiene (7), die vorzugsweise ein U-förmiges Querschnittsprofil aufweist, entlanggleitet
**dadurch gekennzeichnet,dass**
das Gleitelement (12) mindestens ein flexibel ausgebildetes Druckkraftelement (23a, 23b; 24a, 24b) zum Ausüben einer gegen die Führungsschiene (7, 11) gerichteten Druckkraft aufweist, und wobei die ersten Oberflächen (18) derart gestaltet sind, dass jede erste Oberfläche (18) eine im mittleren Bereich der ersten Oberfläche (18) angeordnete erste Fläche (14a, 14b) aufweist, und, in Verschieberichtung (10) betrachtet, mindestens ein nach der ersten Fläche (14a, 14b) angeordnetes erstes flügelartiges Druckkraftelement (23a, 23b) sowie mindestens ein vor der ersten Fläche (14a, 14b) angeordnetes zweites flügelartiges Druckkraftelement (24a, 24b) angeordnet sind.

2. Fahrzeugsitz nach Anspruch 1,
**dadurch gekennzeichnet, dass**
das Gleitelement (12) mindestens ein im Wesentlichen quaderförmiges Element (12) ist.

3. Fahrzeugsitz nach einem der vorangegangenen Ansprüche ,
**dadurch gekennzeichnet, dass**
das erste und das zweite flügelartige Druckkraftelement (23a, 23b; 24a, 24b) in Längs- oder Querrichtung der Führungsschiene leicht gebogene Plattenelemente darstellen, die ein freies erstes Ende (23c, 24c), welches gegen die Führungsschiene drückt, und ein am Gleitelement (12) befestigtes zweites Ende (23d, 24d) aufweisen.

4. Fahrzeugsitz nach einem der vorangegangenen Ansprüche,
**dadurch gekennzeichnet, dass**
die ersten Oberflächen (18) derart gestaltet sind, dass jede erste Oberfläche (18), in Verschieberichtung (10) betrachtet, mindestens eine nach der ersten Fläche (14a, 14b) angeordnete ebene oder bogenförmige zweite Fläche (16a, 16b) sowie mindestens eine vor der ersten Fläche (14a, 14b) angeordnete ebene oder bogenförmige dritte Fläche (15a, 15b) aufweist.

5. Fahrzeugsitz nach Anspruch 4,
**dadurch gekennzeichnet, dass**
die zwei zweiten Flächen (16a, 16b) und zwei dritte Flächen (15a, 15b) jeweils eines der flexibel ausgebildeten Druckkraftelemente randseitig einfassen.

6. Fahrzeugsitz nach Anspruch 4 oder 5,
**dadurch gekennzeichnet, dass**
die zweiten Flächen (16a, 16b), in Verschieberichtung (10) betrachtet, von der ersten Fläche (14a, 14b) aus abfallend zu einem ersten Ende (18a) der ersten Oberfläche (18) hin verlaufen und die dritten Flächen (15a, 15b), entgegen der Verschieberichtung (10) betrachtet, von der ersten Fläche (14a, 14b) aus abfallend zu einem zweiten Ende (18b) der ersten Oberfläche (18) hin verlaufen.

7. Fahrzeugsitz nach einem der Ansprüche 4 bis 6,
**dadurch gekennzeichnet, dass**
die erste und/oder zweiten und/oder dritten Flächen (14a, 14b; 15a, 15b; 16a, 16b), senkrecht zu der Verschieberichtung (10) betrachtet, ausgehend vom mittleren Bereich der Fläche (14a, 14b; 15a, 15b; 16a, 16b) abfallende Flächen (31 a, 31 b) zu Randbereichen der ersten Oberfläche (18) des Elementes (12) hin darstellen bzw. aufweisen.

8. Fahrzeugsitz nach einem der Ansprüche 4 bis 6,
**dadurch gekennzeichnet, dass**
die zweiten und die dritten Flächen als ebene Flächen (15a, 15b; 16a, 16b) mit einem Winkel (34) aus einem Bereich von 0,05°-5,0° gegenüber einer Ebene der Gleitfläche (13b) der Führungsschiene (7) angeordnet sind.

9. Fahrzeugsitz nach einem der vorangegangenen Ansprüche,
**dadurch gekennzeichnet, dass**
das Druckkraftelement im ungespannten Zustand zumindest teilweise gegenüber einer Ebene, die durch die erste Fläche (14a, 14b) aufgespannt ist, mit einem Abstand von 0,3-3mm, vorzugsweise von 0,6mm, von dem Gleitelement wegweisend angeordnet ist.

## Claims

1. Vehicle seat with a seat upper part (2, 3, 7) comprising a seat part (2) and a back rest (3), and with a seat lower part (11), wherein between the seat upper part (2, 3, 7) and the seat lower part (11) is arranged a height-adjustable seat frame (4) with at least two scissor arms (5, 6) connected rotatably together, wherein at least a first end (5a, 6a) of at least one of the scissor arms (5, 6) is connected with at least one slide element (12) for sliding displacement of the first end (5a, 6a) in at least one displacement direction (10) along at least one guide rail (7, 11), and the slide element (12) slides with at least two opposing first surfaces (18) on slide surfaces (13a, 13b) of the guide rail (7) which preferably has a U-shaped cross section profile, **characterised in that** the slide element (12) has at least one flexibly formed pressure force element (23a, 23b, 24a, 24b) to exert a pressure force directed against the guide rail (7, 11), and wherein the first surfaces (18) are structured such that each first surface (18) in the middle section of the first surface (18) has a first face (14a, 14b) and, viewed in displacement direction (10), at least one first wing-like pressure force element (23a, 23b) arranged after the first face (14a, 14b) and at least one second wing-like pressure force element (24a, 24b) arranged before the first face (14a, 14b) are arranged.

2. Vehicle seat according to claim 1, **characterised in that** the slide element (12) is at least one element (12) substantially cuboid-shaped.

3. Vehicle seat according to any of the preceding claims, **characterised in that** the first and second wing-like pressure force elements (23a, 23b, 24a, 24b) constitute plate elements slightly curved in the longitudinal or transverse direction of the guide rail, which elements have a free first end (23c, 24c) pressing against the guide rail and a second end (23d, 24d) fixed to the slide element (12).

4. Vehicle seat according to any of the preceding claims, **characterised in that** the first surfaces (18) are structured such that each first surface (18), viewed in displacement direction (10), has at least one flat or arcuated second face (16a, 16b) arranged after the first face (14a, 14b) and at least one flat or arcuated third face (15a, 15b) arranged before the first face (14a, 14b).

5. Vehicle seat according to claim 4, **characterised in that** the two second faces (16a, 16b) and two third faces (15a, 15b) each border peripherally one of the flexibly formed pressure force elements.

6. Vehicle seat according to claim 4 or 5, **characterised in that** the second faces (16a, 16b), viewed in displacement direction (10), run slopingly from the first face (14a, 14b) towards a first end (18a) of the first surface (18) and the third faces (15a, 15b), viewed against the displacement direction (10), run slopingly from the first face (14a, 14b) towards a second end (18b) of the first surface (18).

7. Vehicle seat according to any of claims 4 to 6, **characterised in that** the first and/or second and/or third faces (14a, 14b; 15a, 15b; 16a, 16b) viewed perpendicular to the displacement direction (10), starting from a middle section of the faces (14a, 14b; 15a, 15b; 16a, 16b) constitute or have, respectively, areas (31 a, 31 b) sloping towards the edge areas of the first surface (18) of the element (2).

8. Vehicle seat according to any of claims 4 to 6, **characterised in that** the second and the third faces are arranged as flat faces (15a, 15b; 16a, 16b) with an angle (34) from the range of 0.05° to 5.0° in relation to a plane of the slide surface (13b) of the guide rail (7).

9. Vehicle seat according to any of the preceding claims, **characterised in that** the pressure force element in the untensioned state is arranged at least partly spaced at a distance of 0.3 to 3 mm, preferably 0.6 mm from a plane spanned by the first face (14a, 14b), and pointing away from the slide element.

## Revendications

1. Siège de véhicule avec une partie supérieure (2, 3, 7), comportant une assise (2) et un dossier (3), et une partie inférieure (11), un châssis (4), réglable en hauteur et muni d'au moins deux bras en ciseaux (5, 6) reliés l'un à l'autre de manière rotative, étant disposé entre la partie supérieure (2, 3, 7) et la partie inférieure (11), au moins une première extrémité (5a, 6a) d'au moins un des bras en ciseaux (5, 6) étant reliée à au moins un élément de glissement (12) pour faire coulisser dans au moins un sens de déplacement (10) la première extrémité (5a, 6a) le long d'au moins un rail de guidage (7, 11), et ledit élément de glissement (12) coulissant avec au moins deux premières faces supérieures (18) face à face le long de surfaces de glissement (13a, 13b) du rail de guidage (7) qui, de préférence, a une section transversale avec un profil en forme de U, **caractérisé en ce que** l'élément de glissement (12) comporte au moins un élément à force de pression (23a, 23b ; 24a, 24b), conçu de manière flexible et destiné à exercer une force de pression dirigée contre le rail de guidage (7, 11), et les premières faces supérieures (18) étant conçues de telle sorte que chaque première face supérieure (18) comporte une première surface (14a, 14b) disposée dans la zone centrale de la première face supérieure (18), et, par référence au sens de déplacement (10), au moins un premier élément à force de pression (23a, 23b) en forme d'ailette étant disposé en aval de la première surface (14a, 14b), ainsi qu' au moins un deuxième élément à force de pression (24a, 24b) en forme d'ailette étant disposé en amont de la première surface (14a, 14b).

2. Siège de véhicule selon la revendication 1, **caractérisé en ce que** l'élément de glissement (12) est au moins un élément (12) sensiblement parallélépipédique.

3. Siège de véhicule selon l'une quelconque des revendications précédentes, **caractérisé en ce que** le premier et le deuxième élément à force de pression (23a, 23b ; 24a, 24b) en forme d'ailette forment des éléments plats légèrement courbes dans le sens longitudinal ou le sens transversal du rail de guidage, lesquels comportent une première extrémité (23c, 24c) libre, qui exerce une pression contre le rail de guidage, et une deuxième extrémité (23d, 24d) fixée à l'élément de glissement (12).

4. Siège de véhicule selon l'une quelconque des revendications précédentes, **caractérisé en ce que** les premières faces supérieures (18) sont conçues de telle sorte que chaque première face supérieure (18), par référence au sens de déplacement (10), comporte au moins une deuxième surface (16a, 16b) plane ou courbe disposée en aval de la première surface (14a, 14b), ainsi qu'au moins une troisième surface (15a, 15b) plane ou courbe disposée en amont de la première surface (14a, 14b).

5. Siège de véhicule selon la revendication 4, **caractérisé en ce que** les deux deuxièmes surfaces (16a, 16b) et les deux troisièmes surfaces (15a, 15b) encadrent chacune sur le bord un des éléments à force de pression flexibles.

6. Siège de véhicule selon la revendication 4 ou 5, **caractérisé en ce que** les deuxièmes surfaces (16a, 16b) s'étendent en pente descendante, par référence au sens de déplacement (10), à partir de la première surface (14a, 14b) vers une première extrémité (18a) de la première face supérieure (18), et les troisièmes surfaces (15a, 15b) s'étendent en pente descendante, par référence au sens opposé au sens de déplacement (10), à partir de la première surface (14a, 14b) vers une deuxième extrémité (18b) de la première face supérieure (18).

7. Siège de véhicule selon l'une quelconque des revendications 4 à 6, **caractérisé en ce que** la première et/ou les deuxièmes et/ou les troisièmes surfaces (14a, 14b ; 15a, 15b ; 16a, 16b) constituent ou respectivement comportent, perpendiculairement au sens de déplacement (10), des surfaces (31 a, 31 b) en pente descendante à partir de la zone centrale de la surface (14a, 14b ; 15a, 15b ; 16a, 16b) vers les zones de bordure de la première face supérieure (18) de l'élément (12).

8. Siège de véhicule selon l'une quelconque des revendications 4 à 6, **caractérisé en ce que** les deuxièmes et les troisièmes surfaces (15a, 15b ; 16a, 16b) sont disposées, en tant que surfaces planes, selon un angle (34), de l'ordre de 0,05° à 5,0°, par rapport à un plan de la surface de glissement (13b) du rail de guidage (7).

9. Siège de véhicule selon l'une quelconque des revendications précédentes, **caractérisé en ce que** l'élément à force de pression, dans la position non contrainte, est disposé au moins en partie par rapport à un plan déployé par la première surface (14a, 14b) à une distance de 0,3 à 3 mm, de préférence de 0,6 mm, en s'écartant de l'élément de glissement.
